# EUROPÄISCHE PATENTANMELDUNG

(11) **EP 4 141 314 A1**
(43) Veröffentlichungstag der Anmeldung: **01.03.2023**
(21) Anmeldenummer: 21193425.2
(22) Anmeldetag: 27.08.2021
(51) Int. Cl.: F17C 1/06

(54) **HOCHDRUCKTANK MIT EINEM BOSSTEIL MIT KUNSTSTOFFBESCHICHTUNG**

(71) Anmelder: MAGNA Energy Storage Systems GmbH, 41516 Grevenbroich (DE)
(72) Erfinder: DREBES, Mario, 92369 Sengenthal (DE)
(74) Vertreter: Zangger, Bernd

(57) **Zusammenfassung**

Ein Hochdrucktank, umfassend einen Liner (1) aus Kunststoff und eine Ummantelung des Liners (1), sowie zumindest einen Bossteil (2), wobei der Bossteil (2) zumindest an einer Kontaktfläche (3) den Liner (1) kontaktiert, wobei die Kontaktfläche (3) eine Kunststoffbeschichtung (4) aufweist, wobei die Kunststoffbeschichtung (4) die einzige Dichtung zwischen Bossteil (2) und Liner (1) darstellt, so dass keine anderen Dichtelemente zwischen Bossteil (2) und Liner (1) vorhanden sind und ein Verfahren zur Herstellung eines solchen Hochdrucktanks.

## Beschreibung

### Gebiet der Erfindung

Die vorliegende Erfindung betrifft einen Hochdrucktank, umfassend einen Liner aus Kunststoff und eine Ummantelung des Liners, sowie zumindest einen Bossteil.

### Stand der Technik

Für Hochdrucktanks, insbesondere Wasserstofftanks, ist die Bauweise bekannt, eine innere Schicht des Tanks aus einem Kunststoffliner auszubilden, beispielsweise aus Polyamid oder Polyethylen, und diesen Liner mit einem Fasermaterial zu ummanteln, beispielsweise mit Kohlefasern. In einen solchen Hochdrucktank ist üblicherweise stirnseitig ein Bossteil aus Metall eingesetzt, insbesondere um eine Entnahmevorrichtung, wie ein Entnahmeventil, zur Befüllung und Entnahme des Mediums aus dem Hochdrucktank aufzunehmen.

Dabei ist die Anbindung des Bossteils an den Liner problematisch, da zwischen Bossteil und Liner eine zuverlässige Dichtheit gegen einen Austritt des Mediums, insbesondere von Wasserstoffgas, sichergestellt werden muss. Um die nötige hohe Dichtheit zu realisieren werden üblicherweise mehrere Dichtelemente, wie Dichtringe, zwischen Bossteil und Liner angeordnet. Die Verwendung von zusätzlichen mechanischen Dichtelementen macht die Herstellung des Behälters aber komplizierter und teurer. Die Wirkung der Dichtelemente kann auch im Lauf der Benutzung des Hochdruckbehälters abnehmen.

### Zusammenfassung der Erfindung

Es ist eine Aufgabe der Erfindung, einen Hochdrucktank der genannten Art in dieser Hinsicht zu verbessern und insbesondere einen Hochdrucktank anzugeben, der eine zuverlässige Dichtheit zwischen Liner und Bossteil gewährleistet und dabei einfach hergestellt werden kann. Eine weitere Aufgabe der Erfindung ist es, ein einfaches und kostengünstiges Verfahren zur Herstellung eines solchen Hochdrucktanks mit guter Dichtheit zwischen Bossteil und Liner anzugeben.

Die Lösung der Aufgabe erfolgt durch einen Hochdrucktank, umfassend einen Liner aus Kunststoff und eine Ummantelung des Liners, sowie zumindest einen Bossteil, wobei der Bossteil zumindest an einer Kontaktfläche den Liner kontaktiert, wobei die Kontaktfläche eine Kunststoffbeschichtung aufweist, wobei die Kunststoffbeschichtung die einzige Dichtung zwischen Bossteil und Liner darstellt, so dass keine anderen Dichtelemente zwischen Bossteil und Liner vorhanden sind.

Erfindungsgemäß wird ein Bossteil mit einem Kunststoff beschichtet, um den Bossteil gegenüber dem Liner abzudichten. Der Kunststoff der Kunststoffschicht kann insbesondere ein Kunststoff sein, der üblicherweise als Korrosionsschutz auf Metallteilen verwendet wird, also ein Korrosionsschutzmittel. Der Kunststoff kann insbesondere Polyamid 11 sein, auch bekannt unter dem Namen Rilsan^{®}, oder kann Polyamid 12 sein. Diese Kunststoffe sind an sich als Korrosionsschutzmittel auf Metallteilen bekannt.

Im Rahmen der Erfindung hat sich herausgestellt, dass Kunststoff-Korrosionsschutzmittel, insbesondere Polyamid 11 und/oder Polyamid 12, an einer Kontaktfläche zwischen Bossteil und Kunststoff-Liner hervorragende Dichtungseigenschaften besitzen, so dass eine derartige Beschichtung des Bossteils als vollständiger Ersatz für sonst übliche Dichtelemente, wie Dichtungsringe, verwendet werden kann.

Weiterbildungen der Erfindung sind in den abhängigen Ansprüchen, der Beschreibung sowie den beigefügten Zeichnungen angegeben.

Die Kunststoffbeschichtung ist bevorzugt eine Rilsan^{®} Polyamid 11 Beschichtung und/oder ist in einem Rilsan^{®} Beschichtungsverfahren auf das Bossteil aufgebracht. Ein derartiges Rilsan^{®} Beschichtungsverfahren ist insbesondere von der Firma ARKEMA bekannt, zum Aufbringen einer Korrosionsschutzschicht auf Metallteile.

Bevorzugt weist die Kunststoffbeschichtung eine Stärke von 50 - 900 µm (Mikrometer) auf, besonders bevorzugt von 300 - 500 µm (Mikrometer).

Vorzugsweise weist die gesamte Kontaktfläche, an welcher der Bossteil den Liner kontaktiert, die Kunststoffbeschichtung auf. Die Dichtung kann sich dann über die gesamte mit dem Liner in Kontakt stehende Oberfläche des Bossteils erstrecken. Alternativ kann eine nur partielle Beschichtung der Kontaktfläche mit dem Kunststoff erfolgen.

Ein Verfahren zur Herstellung eines solchen Hochdrucktanks umfasst erfindungsgemäß den Schritt, dass die Kunststoffbeschichtung durch Pulverbeschichtung, insbesondere mit Polyamid 11 oder Polyamid 12, auf die Kontaktfläche des Bossteils aufgebracht wird, bevorzugt durch ein Sinterverfahren wie Wirbelsintern oder ein elektrostatisches Pulversprühverfahren oder Flammspritzverfahren.

Vor der Pulverbeschichtung findet bevorzugt eine chemische oder mechanische Vorbehandlung der Kontaktfläche statt, besonders bevorzugt eine Bestrahlung, insbesondere mit Edelkorund.

Vor der Pulverbeschichtung und bevorzugt nach der chemischen oder mechanischen Vorbehandlung der Kontaktfläche, wird vorzugsweise eine Haftgrundierung auf die Kontaktfläche aufgebracht, insbesondere eine Haftgrundierung mit Primgreen^{®} LAT 12035.

Bevorzugt erfolgt die Pulverbeschichtung des Bossteils vorgelagert zur formgebenden Herstellung des Hochdrucktanks. Die Verbindung der Beschichtung zum Liner kann wahlweise im Rotations-, Thermoform-, Blasform- oder Spritzgussverfahren erfolgen.

Bevorzugt erzeugt daher die Pulverbeschichtung des Bossteils einen Materialverbund zum Liner des Hochdrucktanks wahlweise im Rotations-, Thermoform-, Blasform- oder Spritzgussverfahren.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines Bossteils eines erfindungsgemäßen Hochdrucktanks.
- Fig. 2: ist eine Schnittansicht des Bossteils gemäß Fig. 1, verbunden mit einem Liner.

### Detaillierte Beschreibung der Erfindung

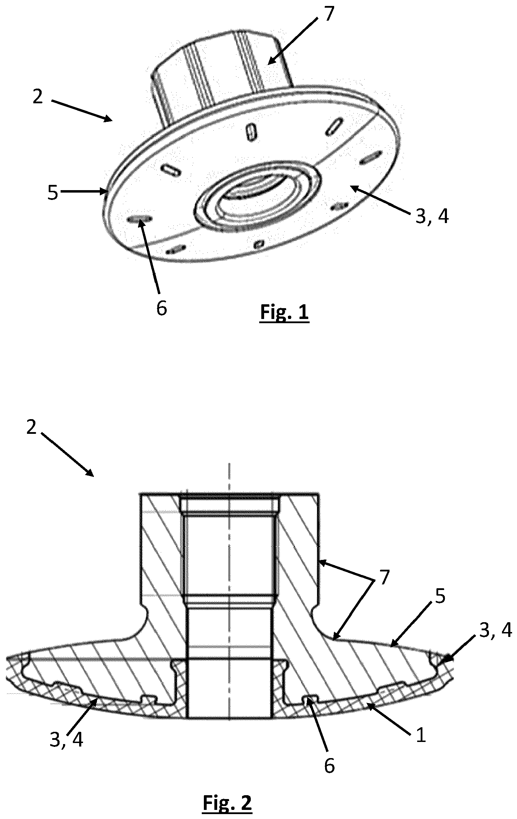

In den Fig. 1-2 ist ein beschichteter Bossteil eines erfindungsgemäßen Hochdrucktanks dargestellt. Dabei stellt Fig. 2 zusätzlich den Liner (1) eines Hochdruckbehälters im Bereich des Bossteils (2) ausschnittsweise dar.

Ein Hochdrucktank umfasst einen Liner 1 aus Kunststoff - ausschnittsweise in Fig. 2 dargestellt - und eine Ummantelung des Liners 1, die üblicherweise ein in eine Matrix eingebettetes Fasermaterial umfasst - in den Fig. nicht dargestellt. An zumindest einer Stirnseite des Hochdrucktanks wird ein Bossteil 2 verwendet, zur Entnahme des Mediums aus dem Hochdrucktank. Der Bossteil 2 weist eine Kontaktfläche 3 zu dem Liner 1 hin auf. Der Bossteil 2 hat im Wesentlichen eine Zylinderform und weist einen Kragen 5 mit größerem Umfang an seinem, dem Inneren des Hochdrucktanks zugewendeten, axialen Ende auf. Die dem Inneren des Hochdrucktanks zugewendete Unterseite des Kragens 5 bildet im Wesentlichen die Kontaktfläche 3. Die Kontaktfläche 3 umfasst bevorzugt auch einen radial innen liegenden, axial verlaufenden Abschnitt des Bossteils 2, der eine zentrale Bohrung des Bossteils 2 umgibt.

Der Bossteil 2 weist an der Kontaktfläche 3 auch Nuten 6 auf, die beispielsweise umlaufend, insbesondere kreissegmentförmig und/oder kreisförmig umlaufend, und/oder sich radial erstreckend ausgebildet sein können. Die Nuten 6 bildet ebenfalls einen Teil der beschichteten Kontaktfläche 3. Nuten und allgemein zusätzliche mechanische Befestigung mittels Hinterschnitten und Segmente 6 auf der Dichtfläche können je nach Ausführungsform durch die Beschichtung auch komplett entfallen. Die Funktion der Verdrehsicherung durch die Nuten 6 kann durch die flächige Beschichtung ersetzt sein. Generell kann ein partieller Bereich mit Beschichtung der dem Liner 1 zugewandten Seite (3, 4) für die Dicht- und Verbindungsfunktion ggfs. schon ausreichend sein.

Die Kontaktfläche 3 weist wenigstens teilweise oder vollständig eine Kunststoffbeschichtung 4 aus Rilsan^{®} Polyamid 11 oder vergleichbaren Materialien auf. Die Kunststoffbeschichtung 4 stellt die einzige Dichtung zwischen Bossteil 2 und Liner 1 dar. Es sind keine anderen Dichtelemente zwischen Bossteil 2 und Liner 1 angeordnet.

Die Kunststoffbeschichtung 4 weist eine Stärke von ca. 50 - 500 µm auf.

Die Kunststoffbeschichtung 4 ist durch ein Beschichtungsverfahren, beispielsweise mittels Pulverbeschichtung mit Polyamid 11, auf die Kontaktfläche 3 des Bossteils 2 aufgebracht.

Dazu wurde zunächst ein nicht zu beschichtender Bereich 7 des Bossteils 2 maskiert.

Vor der Beschichtung erfolgt eine chemische oder mechanische Vorbehandlung der Kontaktfläche 3, bevorzugt eine Bestrahlung mit Edelkorund.

Nach der chemischen oder mechanischen Vorbehandlung der Kontaktfläche 3, wird eine Haftgrundierung auf die Kontaktfläche 3 aufgebracht, beispielsweise eine Haftgrundierung mit Primgreen^{®} LAT 12035.

Der Materialverbund zwischen beschichteter Fläche des Bossteils (2) und dem Hochdrucktank (Liner) erfolgt wahlweise im Rotations-, Thermoform-, Blasform- oder Spritzgussverfahren

### Bezugszeichenliste

- 1: Liner
- 2: Bossteil
- 3: Kontaktfläche
- 4: Kunststoffbeschichtung
- 5: Kragen
- 6: Nut
- 7: Nicht zu beschichtender Bereich des Bossteils

## Patentansprüche

1. Hochdrucktank, umfassend einen Liner (1) aus Kunststoff und eine Ummantelung des Liners (1), sowie zumindest einen Bossteil (2), wobei der Bossteil (2) zumindest an einer Kontaktfläche (3) den Liner (1) kontaktiert,
**dadurch gekennzeichnet, dass** die Kontaktfläche (3) eine Kunststoffbeschichtung (4) aufweist, wobei die Kunststoffbeschichtung (4) die einzige Dichtung zwischen Bossteil (2) und Liner (1) darstellt, so dass keine anderen Dichtelemente zwischen Bossteil (2) und Liner (1) vorhanden sind.

2. Hochdrucktank nach Anspruch 1,
**dadurch gekennzeichnet, dass** die Kunststoffbeschichtung (4) eine Polyamid 11 Beschichtung oder eine Polyamid 12 Beschichtung ist.

3. Hochdrucktank nach Anspruch 1 oder 2,
**dadurch gekennzeichnet, dass** die Kunststoffbeschichtung (4) eine Rilsan^{®} Polyamid 11 Beschichtung ist und/oder in einem Rilsan^{®} Beschichtungsverfahren auf das Bossteil (2) aufgebracht ist.

4. Hochdrucktank nach zumindest einem der vorhergehenden Ansprüche,
**dadurch gekennzeichnet, dass** die Kunststoffbeschichtung (4) eine Stärke von 50 - 900 µm aufweist, bevorzugt von 300 - 500 µm.

5. Hochdrucktank nach zumindest einem der vorhergehenden Ansprüche,
**dadurch gekennzeichnet, dass** die gesamte Kontaktfläche (3), an welcher der Bossteil (2) den Liner (1) kontaktiert, die Kunststoffbeschichtung (4) aufweist.

6. Verfahren zur Herstellung eines Hochdrucktanks nach zumindest einem der vorhergehenden Ansprüche,
**dadurch gekennzeichnet, dass** die Kunststoffbeschichtung (4) durch Pulverbeschichtung, insbesondere mit Rilsan^{®} Polyamid 11 oder Polyamid 12, auf die Kontaktfläche (3) des Bossteils (2) aufgebracht wird.

7. Verfahren zur Herstellung eines Hochdrucktanks nach Anspruch 6,
**dadurch gekennzeichnet, dass** vor der Pulverbeschichtung eine chemische oder mechanische Vorbehandlung der Kontaktfläche (3) stattfindet, bevorzugt eine Bestrahlung mit Edelkorund.

8. Verfahren zur Herstellung eines Hochdrucktanks nach zumindest einem der vorhergehenden Ansprüche 6 bis 7,
**dadurch gekennzeichnet, dass**, vor der Pulverbeschichtung und nach der chemischen oder mechanischen Vorbehandlung der Kontaktfläche (3), eine Haftgrundierung auf die Kontaktfläche (3) aufgebracht wird, insbesondere eine Haftgrundierung mit Primgreen^{®} LAT 12035.

9. Verfahren zur Herstellung eines Hochdrucktanks nach zumindest einem der vorhergehenden Ansprüche 6 bis 8,
**dadurch gekennzeichnet, dass** nach der Pulverbeschichtung des Bossteils (2) eine Formgebung des Liners (1) des Hochdrucktanks erfolgt und eine Verbindung der Kunststoffbeschichtung (4) zum Liner (1) bei der Formgebung des Liners (1) erfolgt, bevorzugt im Rotations-, Thermoform-, Blasform- oder Spritzgussverfahren.
